# EUROPEAN PATENT APPLICATION

(11) **EP 4 740 748 A1**
(43) Date of publication of application: **13.05.2026**
(21) Application number: 24840048.3
(22) Date of filing: 08.07.2024
(51) Int. Cl.: A23L 27/00

(54) **FOOD COMPOSITION COMPRISING NATURAL EXTRACT FOR ENHANCING SALTINESS, AND MULTIPLE EMULSIONS USING SAME**

(30) Priority: 07.07.2023 KR 20230088542
(71) Applicant: Konkuk University Industrial Cooperation Corp, Seoul 05029 (KR)
(72) Inventor: CHOI, Mi Jung, Namyangju-si, Gyeonggi-do 12111 (KR); BYEON, Yeong Mi, Seoul 05008 (KR); LEE, Ji Seon, Seoul 05663 (KR)
(74) Representative: Witthoff Jaekel Steinecke Patentanwälte PartG mbB
(86) International application number: PCT/KR2024/009717
(87) International publication number: WO 2025/014237

(57) **Abstract**

The present invention relates to a food composition using a natural extract for enhancing saltiness. More specifically, a mixing ratio of a shiitake mushroom extract, a lotus root extract and a Chinese cabbage extract, which have high saltiness perceivability, is provided and is used for preparing a double emulsion. The double emulsion prepared according to the present invention has enhanced saltiness while having a stable form, and enables the amount of oil to be reduced, and thus the present invention can be applied to the preparation of various food by using the emulsion.

## Description

### Technical Field

The present invention relates to a composition for enhancing saltiness of foods using natural extracts, and to a saltiness enhancer. More specifically, the invention provides an effective mixing ratio of shiitake mushroom, lotus root, and Chinese cabbage extracts for enhancing saltiness, and provides foods in the form of a multiple emulsion using the same. When foods are prepared using the composition of the present invention, sodium intake can be reduced.

The present invention was carried out with the support of the High Value-Added Food Technology Development Program funded by the Ministry of Agriculture, Food and Rural Affairs, under the research project titled "Development of saltiness substitute materials for sodium reduction for hypertension patients, discovery of potassium materials for enhancing potassium content, and development of products applying the same" (Project No.: RS-2024-00403609; Managing Agency: Korea Institute of Planning and Evaluation for Technology in Food, Agriculture and Forestry; Lead Organization: Shinsegae Food Co., Ltd.; Research Period: April 1, 2024 to December 31, 2027).

### Related Art

The physiologically required amount of sodium in the human body is 180 to 230 mg/day, which is a level that can be sufficiently supplied from naturally consumed foods (WHO, 2007). However, according to report data from the Ministry of Health and Welfare, the daily sodium intake of the Korean population is 4,878 mg, which is a very serious level, being 2.4 times higher than the maximum intake of 2,000 mg recommended by the World Health Organization. In particular, in the case of males aged 30 to 50 years, the intake reaches as high as 6,327 mg, which is more than three times the recommended level. Such sodium intake has been shown to be the highest level, excluding African countries. As a result of comparing daily salt intake, the United States consumes 8,000 to 12,000 mg/day, and the European Union consumes 8,000 to 11,000 mg/day (EFSA, 2005). In particular, Korea consumes 15,000 to 20,000 mg/day, which is very high compared to the United States or the European Union, indicating that the development of sodium reduction technologies is urgently required.

Accordingly, the Korea Food and Drug Administration (KFDA) is also implementing policies to reduce sodium in processed foods and has issued notices regarding the stepwise reduction of salinity of major sources of sodium intake, such as soy sauce, soybean paste, and red pepper paste. In particular, in the case of fermented paste products, related industries are being actively promoted to reduce salinity by 0.1 to 1.0, thereby enabling a reduction of sodium content by up to 400 mg per 100 g of product.

In order to reduce sodium intake, methods using salt substitutes or saltiness enhancers may be employed. As salt substitutes, KCI, MgCl₂, MgSO₄ and the like have been used, however, since they are chemically manufactured and generate inherent bitterness as well as unpleasant tastes and odors, their palatability is low. In contrast, when saltiness enhancers are used, saltiness is perceived to a significantly greater extent compared to the use of the same amount of salt, thereby providing the advantage of reducing sodium usage while maintaining palatability.

As saltiness enhancers, animal-based materials such as beef or anchovies have been frequently used; however, recently, due to social issues such as animal welfare, health, religious beliefs, and the environment, research on the development of plant-based materials has been increasing.

Accordingly, the present inventors selected materials having saltiness-enhancing effects from plant-based materials and completed the present invention by using the same to enable a significantly greater perception of saltiness compared to the use of the same amount of salt, thereby reducing sodium intake.

### SUMMARY OF THE INVENTION

### TECHNICAL PROBLEM

The present invention has been devised to solve the above-described problems and to meet the above-described needs, and an object thereof is to provide a formulation ratio of vegetable extracts capable of reducing sodium intake.

The present invention also aims to provide a preparation ratio of a double emulsion having form stability by applying vegetable extracts having a saltiness-enhancing effect.

### TECHNICAL SOLUTION

Hereinafter, the present invention will be described in detail with reference to the drawings. The advantages and features of the present invention, and methods for achieving the same, will become apparent with reference to the examples described below. However, the present invention is not limited to the examples set forth herein and may be embodied in various different forms. The examples disclosed herein are provided to make the disclosure of the present invention complete and to fully inform a person having ordinary skill in the art to which the present invention pertains of the scope of the invention, and the present invention is defined only by the scope of the claims. Throughout the specification, like reference numerals refer to like components.

Unless otherwise defined, all terms used herein(including technical and scientific terms) may be used with meanings commonly understood by a person having ordinary skill in the art to which the present invention pertains. In addition, terms that are generally used and defined in dictionaries are not to be interpreted ideally or excessively unless clearly and specifically defined otherwise. The terms used herein are for the purpose of describing examples and are not intended to limit the present invention. As used herein, the singular forms include the plural forms unless the context clearly indicates otherwise.

The present invention provides a food composition for enhancing saltiness comprising a shiitake mushroom (Lentinula edodes) extract, a lotus root (Nelumbo nucifera) extract, and a Chinese cabbage (Brassica campestris) extract.

In the present invention, the shiitake mushroom extract, the lotus root extract, and the Chinese cabbage extract are mixed in a weight ratio of 2:5:3, thereby enhancing the saltiness-enhancing effect.

According to one preferred embodiment, the shiitake mushroom extract, the lotus root extract, and the Chinese cabbage extract are obtained by extracting 5 to 15 g of dried shiitake mushroom, dried lotus root, and dried napa cabbage, respectively, per liter (L) of an extraction solvent.

The shiitake mushroom extract, the lotus root extract, and the Chinese cabbage extract of the present invention are not limited with respect to extraction methods, however, the solvent is water (purified water), and hot-water extraction is preferred.

The present invention also provides A food additive emulsion comprising a mixed composition of a shiitake mushroom (Lentinula edodes) extract, a lotus root (Nelumbo nucifera) extract and a Chinese cabbage (Brassica campestris) extract.

The food additive emulsion of the present invention is a water-in-oil-in-water (W₁/O/W₂) double emulsion in which a water-in-oil (W₁/O) emulsion is dispersed in an external aqueous phase (W₂), wherein W₁ is an internal aqueous phase, O is an oil phase, and W₂ is an external aqueous phase, and the external aqueous phase may comprise the mixed composition of the shiitake mushroom extract, the lotus root extract and the Chinese cabbage extract.

The mixed composition is prepared by mixing, based on 1 part by weight of the shiitake mushroom extract, 0.7 to 2.5 parts by weight (or 0.75 to 2.5 parts by weight) of the lotus root extract and 0.6 to 1.5 parts by weight of the Chinese cabbage extract (preferably in a weight ratio of 2:5:3).

The food additive emulsion of the present invention, it is preferable that 2 parts by weight of the external aqueous phase (W₂) are mixed with respect to 8 parts by weight of the water-in-oil (W₁/O) emulsion. When mixed at the above ratio, stable high internal phase double emulsions (hereinafter referred to as "HIPDEs") can be prepared.

The present invention also provides a method for preparing a food additive emulsion, comprising a) preparing a mixed composition comprising a shiitake mushroom (Lentinula edodes) extract, a lotus root (Nelumbo nucifera) extract and a Chinese cabbage (Brassica campestris) extract; b) preparing a water-in-oil (W₁/O) emulsion; and c) mixing 8 parts by weight of the water-in-oil emulsion of step b) with respect to 2 parts by weight of the mixed composition prepared in step a).

In the present invention, the mixed composition is preferably prepared by mixing, based on 1 part by weight of the shiitake mushroom extract, 0.7 to 2.5 parts by weight (or 0.75 to 2.5 parts by weight) of the lotus root extract and 0.6 to 1.5 parts by weight of the Chinese cabbage extract (preferably in a weight ratio of 2:5:3).

The present invention also provides mayonnaise comprising the food composition or comprising the food additive emulsion prepared by the method.

### ADVANTAGEOUS EFFECTS

The present invention selects shiitake mushroom, lotus root, and Chinese cabbage as extraction targets and provides a food composition including unprocessed natural extracts and provides a mixing ratio that is most effective for enhancing saltiness.

When the food composition of the present invention is used, the perception of saltiness can be increased even without the separate addition of sodium, thereby reducing sodium intake by consumers.

The present invention also provides a double emulsion using the mixed composition of the shiitake mushroom, lotus root, and Chinese cabbage extracts, and the double emulsion prepared according to the present invention exhibits saltiness while maintaining a stable form, thereby allowing a reduction in additionally used oil and sodium.

### BRIEF DESCRIPTION OF THE DRAWINGS

FIG. 1 is an image showing the appearance of Chinese cabbage extracts prepared by different methods according to one embodiment of the present invention. A and C of FIG. 1 show the results obtained under conditions of 250 mL of water and 5 g of dried vegetables, and B and D of FIG. 1 show the results obtained under conditions of 250 mL of water and 2.5 g of dried vegetables.
FIG. 2 is an image of single extracts (vegetable stocks) and mixed extracts (vegetable stocks) prepared according to the present invention. In FIG. 2, A represents a shiitake mushroom extract (S), B represents a lotus root extract (L), and C represents a Chinese cabbage extract (C). In addition, D, E, F, and G of FIG. 2 represent images of compositions (mixed vegetable stocks) prepared by mixing the shiitake mushroom extract, lotus root extract and Chinese cabbage extract at weight ratios of 4:3:3, 5:3:2, 2:5:3 and 3:5:2, respectively.
FIG. 3 is a graph showing the results of salinity measurements of single vegetable stocks and mixed vegetable stocks. In FIG. 3, S denotes a single shiitake mushroom stock, L denotes a single lotus root stock, C denotes a single Chinese cabbage stock and SLC denotes a mixed vegetable stock prepared by mixing shiitake mushroom, lotus root, and Chinese cabbage stocks according to the numerical ratios indicated in the figure. In these results, p < 0.05.
FIG. 4 is a graph showing the results of sensory evaluation of single vegetable stocks and mixed vegetable stocks (evaluated on a 9-point scale for saltiness intensity, saltiness preference and overall preference).
FIG. 5 is a graph comparing perceived saltiness intensity by sensory evaluation according to the salt concentration added to water and vegetable stocks, respectively.

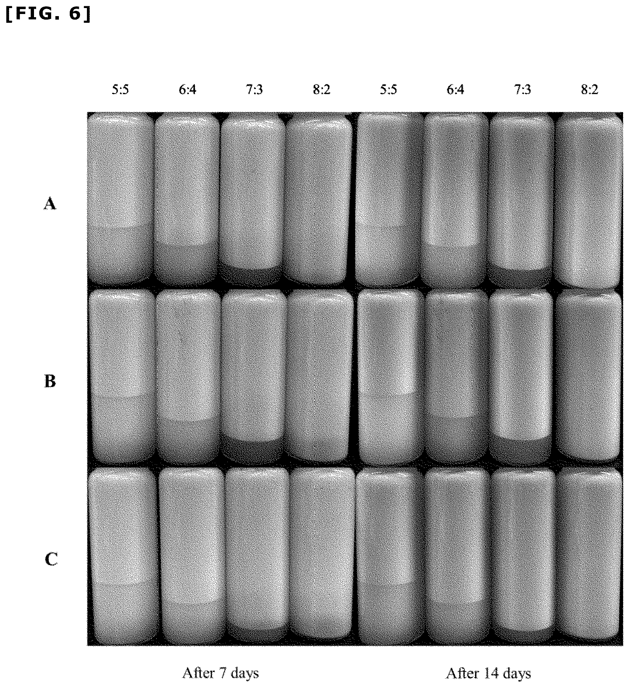

FIG. 6 is an image showing the appearance of double emulsions over time according to the W₁/O:W₂ ratio. In FIG. 6, A shows results obtained when the same ionic strength (116 mM NaCl) was applied to both the internal and external aqueous phases, B shows results obtained when different ionic strengths were applied by adding amino acids to the internal aqueous phase (66 mM NaCl and 30 mM each of L-arginine and glycine) and to the external aqueous phase (96 mM NaCl) and C shows results obtained when different ionic strengths were applied by adding amino acids to the internal aqueous phase (97 mM MgCl₂) and to the external aqueous phase (116 mM NaCl and 30 mM each of L-arginine and glycine). From left to right, the W₁/O:W₂ ratios are 5:5, 6:4, 7:3 and 8:2.
FIG. 7 is an image showing the droplet size distribution of double emulsions prepared according to the present invention. In FIG.7, A shows the result immediately after preparation of the double emulsion, B shows the result after 7 days, and C shows the result after 14 days. All primary emulsions (W₁/O) of the double emulsions observed in FIG. 7 were prepared under conditions of W₁ 50% and O 50%.
FIG. 8 shows the storage modulus (G') and loss modulus (G") of double emulsions prepared according to the present invention. The results show measurements obtained immediately after preparation at a W₁/O:W₂ ratio of 8:2 (A) and 7:3 (B), after 7 days at a ratio of 8:2 (C), and after 14 days at a ratio of 8:2 (D).
FIG. 9 is an image showing the appearance of HIPDEs prepared according to the type of vegetable stocks. In FIG. 9, "control" refers to control HIPDEs, and S, L, C and SLC253 refer to HIPDEs prepared using the respective vegetable stocks.
FIG. 10 shows the results of particle size distribution of HIPDEs to which the vegetable stocks prepared according to the present invention were applied, as a function of storage time.
FIG. 11 is an image obtained by observing, using an optical microscope, HIPDEs to which the vegetable stocks prepared according to the present invention are applied, as a function of storage period.
FIG. 12 shows results of measuring viscoelastic properties of HIPDEs to which the vegetable stocks prepared according to the present invention are applied, as a function of storage period.
FIG. 13 is an external appearance image of HIPDEs prepared according to one embodiment of the present invention, in which the W₁:O ratio in the primary emulsion is set to 2:8.
FIG. 14 is an image obtained by observing, using a microscope, particles of HIPDEs prepared with a W₁:O ratio of 2:8 in the primary emulsion.
FIG. 15 is an image illustrating the principle of a double emulsion.
FIG. 16 shows results of confirming the external appearance of each mayonnaise in the form of HIPDEs prepared according to the present invention.
FIG. 17 shows results of comparing differences in perceived saltiness between a single mayonnaise and a double mayonnaise prepared according to the present invention.
FIG. 18 shows results of confirming whether a double mayonnaise to which the mixed vegetable stock according to the present invention is applied exhibits the same saltiness as a single mayonnaise when the salt content is increased by x%.

### BEST MODE FOR CARRYING OUT THE INVENTION

Hereinafter, the present invention will be described in more detail with reference to Examples. The following Examples are provided merely for the purpose of illustrating the present invention, and the scope of the present invention is not limited by the following Examples.

The present invention provides a food composition for enhancing saltiness, comprising a shiitake mushroom (Lentinula edodes) extract, a lotus root (Nelumbo nucifera) extract and a Chinese cabbage (Brassica campestris) extract.

In the present invention, the term "vegetable stock" refers to an extract obtained by infusing vegetables or the like, and in the present invention, refers to extracts of shiitake mushroom, lotus root and Chinese cabbage, respectively. In the present invention, the shiitake mushroom vegetable stock, the lotus root vegetable stock, and the Chinese cabbage vegetable stock refer to extracts of shiitake mushroom, lotus root and Chinese cabbage, respectively.

In the present invention, the extraction method is not particularly limited, however, most preferably, a hot-water extraction method is used.

The present invention provides a method for forming multiple emulsion (preferably, HIPDEs) using the vegetable stock.

A multiple emulsion is a system in which a W/O emulsion and an O/W emulsion coexist simultaneously within an emulsion. Specifically, a multiple emulsion includes an oil-in-water-in-oil (O/W/O) type emulsion in which a W/O emulsion is redispersed in an oil phase, and conversely, a water-in-oil-in-water (W/O/W) type emulsion formed by redispersing a W/O emulsion in an aqueous phase.

Multiple emulsions may appear in various forms, such as O/W/O, W/O/W, O/W/O/W, W/O/W/O and O/W/O/O, depending on the composition of emulsifiers and the preparing method. However, studies have been extensively conducted on W/O/W multiple emulsions, which have high applicability in terms of stability and usability.

The W/O/W multiple emulsion has a semipermeable liquid film characteristic in which an oil phase separates an internal aqueous phase from an external aqueous phase. This characteristic allows the multiple emulsion to be used as a controllable release and delivery system. Accordingly, such W/O/W multiple emulsions may be applied to medical fields, cosmetics, and solvent extraction.

In the present invention, to prepare a stable multiple emulsion (preferably HIPDEs) having a saltiness enhancing effect, a method for preparing a W₁/O/W₂ double emulsion, in which a vegetable stock is applied to an external aqueous phase (W₂), is provided.

In the present invention, a vegetable stock may be used in the external aqueous phase, and preferably, a food composition (mixed vegetable stock) in which a shiitake mushroom extract, a lotus root extract and a Chinese cabbage extract are mixed at a weight ratio of 1 : 0.7 to 2.5 : 0.6 to 1.5 may be used. In the present invention, by applying mixed vegetable stocks having ratios such as SLC253, SLC433, SLC352 and the like to the external aqueous phase of the multiple emulsion, it is possible not only to reduce the content of oil but also to achieve a saltiness enhancing effect, thereby enabling use without the addition of sodium and consequently reducing sodium intake.

The oil used in forming the emulsion of the present invention is not particularly limited, and may include oils that are acceptable for addition to foods, such as MCT oil, carrot oil, peanut oil, almond oil, jojoba oil, apricot seed oil, avocado oil, canola oil, evening primrose seed oil, grape seed oil, olive oil, rice bran oil, rosehip oil, sesame oil, soybean oil, sunflower seed oil, coconut oil, and the like. The surfactant added to the oil is also not particularly limited, and may include not only lecithin but also Span 60, Span 80, Span 83, Span 120 and the like. In addition, hydrophobic functional substances added to the oil are not particularly limited, and may include antheraxanthin, astaxanthin, alpha-carotene, beta-carotene, beta-apo-4'-carotenal, beta-apo-8'-carotenal, canthaxanthin, citranaxanthin, cryptoxanthin, dehydroplectaniaxanthin, diatoxanthin, fucoxanthin, fucoxanthinol, lactucaxanthin, lutein, lycopene, neoxanthin, neurosporaxanthin, neurosporene, peridinin, phytoene, rhodopin, siphonaxanthin, spheroidene, spirilloxanthin, torularhodin, uriolide, uriolide acetate, violaxanthin, zeaxanthin, bixin, capsanthin, gamma-carotene, delta-carotene, epsilon-carotene, zeta-carotene, norbixin, torulene, nerolidol, citral, cinnamaldehyde, citronellol, cis-3-hexenal, isoamyl acetate, 1-octen-3-one, octyl acetate, massoia lactone, menthol, methyl butyrate, menthone, pentyl butyrate, pentyl pentanoate, geraniol, decanal, 1-naphthol, and other nutritional substances, including fish oil, beeswax, D-limonene, vitamin A, vitamin E, coenzyme Q10 (Co-Q10), lecithin, docosahexaenoic acid (DHA), eicosapentaenoic acid (EPA), capsaicin, quercetin and the like.

The surfactant used in forming the single emulsion of the present invention is also not particularly limited, and may include polysorbate 80 (Tween 80), polysorbate 20 (Tween 20), polysorbate 40 (Tween 40), polysorbate 60 (Tween 60) and the like.

In the present invention, the term "mayonnaise" refers to an emulsified semi-solid food that generally uses an animal-derived ingredient serving as an emulsifier, namely egg yolk, as a base, and includes refined vegetable oil and vinegar, and is used for the purpose of enhancing flavor as a dressing, sauce or the like for various salads, or as an ingredient in cooking.

### [Example 1]

### Preparation of Vegetable Stock

In the present invention, among plant-based materials, shiitake mushroom, lotus root and Chinese cabbage were selected as vegetables rich in representative amino acids (glutamic acid, glycine, arginine and the like) that impart umami taste. Using a vegetable hot-water extracts (hereinafter referred to as "vegetable stock"), which is an extract obtained by hot-water extraction using the above materials, it was verified whether the vegetable stock has an effect as a saltiness enhancer.

### 1-1. Extraction Conditions of Vegetable Stock

The vegetable stock of the present invention was prepared by drying shiitake mushroom, Chinese cabbage and lotus root, followed by extraction using a hot-water extraction method. In present Example, a preliminary experiment was conducted using Chinese cabbage to determine the concentration of each individual vegetable stock.

**[Table 1]**

| | Extraction ratio | temperature | time |
|---|---|---|---|
| A | water 250 mL +dried vegetables 5g | 100°C water bath | 1h |
| B | water 250 mL +dried vegetables 2.5g | | 1h |
| C | water 250 mL +dried vegetables 5g | | 2h |
| D | water 250 mL +dried vegetables 2.5g | | 2h |

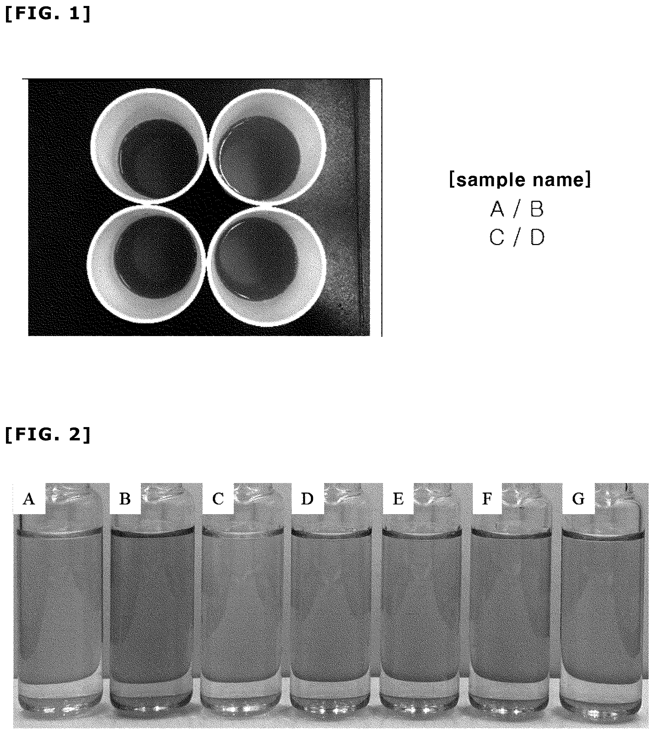

The results extracted according to the method shown in Table 1 are illustrated in FIG. 1. Referring to FIG. 1, although there is a difference of approximately one hour in the extraction time between A and C, and between B and D, little difference in color was visually observed. In addition, samples A and C, which were prepared using 5 g of dried vegetables, corresponding to the conventional dried vegetable content, exhibited excessively strong taste and aroma. In contrast, when the amount was reduced by half to 2.5 g, a mild aroma was perceived, and the sweetness of Chinese cabbage was not overpowering, and it was determined that such conditions would not affect saltiness perception (5 g: dried vegetable content of 1.96% / 2.5 g: dried vegetable content of 0.99%).

Accordingly, the vegetable stock of the present invention is preferably prepared by extracting 5 to 15 g (preferably 10 g) of dried vegetables per 1 L of water. In the following Examples, the vegetable stock was prepared under conditions of using 2.5 g of dried vegetables (dried vegetable content of 0.99%) per 250 mL of water, at 100 °C in a water bath for 2 hours.

### 1-2. Mixing Ratio of Vegetable Stocks

Commercially available shiitake mushroom, lotus root, and Chinese cabbage were purchased, dried in a hot-air dryer at a temperature of 60 °C for at least 20 hours, and stored in a cool place protected from direct sunlight.

Each of the dried shiitake mushroom, lotus root and Chinese cabbage was subjected to hot-water extraction at 100 °C (by heating in a water bath for 2 hours), after which the solid residues were separately filtered out to prepare clear vegetable stock as individual vegetable stock s (The extraction ratios for hot-water extraction of each individual vegetable stock are shown in Table 2 below). The ratios in Table 2 represent weight ratios (w/w%).

**[Table 2]**

| (W/W%) | | | |
|---|---|---|---|
| Material | Ratio (%) | | |
| | Shiitake mushroom stock(S) | Lotus root stock(L) | Chinese cabbage stock(C) |
| dried shiitake mushroom | 1 | - | - |
| dried lotus root | - | 1 | - |
| dried Chinese cabbage | - | - | 1 |
| water | 99 | 99 | 99 |
| total | 100 | 100 | 100 |

The mixed vegetable stock according to the present invention is prepared by mixing single vegetable stocks of shiitake mushroom, lotus root and Chinese cabbage, and each mixing ratio is as shown in Table 2 below. The appearances of the three single vegetable stocks and the four mixed vegetable stocks, respectively, prepared according to the present invention are illustrated in FIG. 2. The ratios shown in Table 3 below represent weight ratios (w/w%).

**[Table 3]**

| Mixing ratios for preparation of mixed vegetable stock | | | | |
|---|---|---|---|---|
| (W/W%) | | | | |
| Treatme nt | Ratio (%) | | | Total (%) |
| | Shiitake mushroom stock | Lotus root stock | Chinese cabbage stock | |
| S | 100 | - | - | |
| L | - | 100 | - | |
| C | - | - | 100 | 100 |
| SLC433 | 40 | 30 | 30 | |
| SLC532 | 50 | 30 | 20 | |
| SLC253 | 20 | 50 | 30 | |
| SLC352 | 30 | 50 | 20 | |
| SLC244 | 20 | 40 | 40 | |
| SLC442 | 40 | 40 | 20 | |

Unless otherwise specified in Table 3 and the following description, S refers to a shiitake mushroom extract (shiitake mushroom stock), L refers to a lotus root extract (lotus root stock), and C refers to a Chinese cabbage extract (Chinese cabbage stock).

In the present invention, SLC refers to a mixed composition of shiitake mushroom extract, lotus root extract and Chinese cabbage extract. The numerical values indicated after SLC represent the mixing weight ratio of each individual extract. For example, "SLC253" refers to a composition in which the shiitake mushroom extract, the lotus root extract and the Chinese cabbage extract are mixed at a weight ratio of 2:5:3.

### [Example 2]

### Verification of Saltiness-Enhancing Effect of Vegetable Stocks

### 2-1. Measurement of Salinity

In present Example, the salinity of each of the single vegetable stocks (S, L, C) and the mixed vegetable stocks (SLC433, SLC532, SLC253, SLC352, SLC244 and SLC442) prepared in Example 1 was measured using a conductivity meter (SevenCompact TM S230 conductivity meter, Mettler Toledo International Inc., Schwerzenbach, Switzerland).

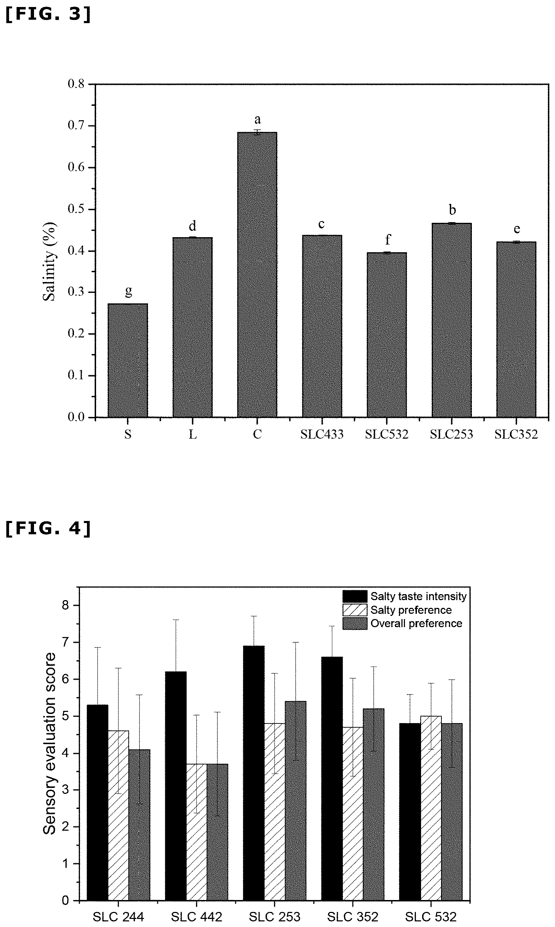

The results of the salinity analysis of each vegetable stock measured according to present Example are shown in FIG. 3. Referring to FIG. 3, among the single vegetable stocks, the salinity was highest in the Chinese cabbage extract, followed by the lotus root extract and the shiitake mushroom extract. Among the mixed vegetable stocks, it was confirmed that the SLC253 formulation (S:L:C = 2:5:3) exhibited the highest salinity.

### 2-2. Sensory Evaluation

A sensory evaluation was conducted to compare the saltiness of three types of single vegetable stocks (S, L, C) and six types of mixed vegetable stocks (SLC433, SLC532, SLC253, SLC352, SLC244 and SLC442) prepared according to Example 1-2.

The sensory evaluation was performed using a 9-point scale for saltiness intensity, saltiness preference, and overall preference. Among the single vegetable stocks, the lotus root stock (L) exhibited the highest saltiness intensity and overall preference. The high perceived saltiness of the lotus root stock is presumed to be associated with its highest amino acid content, and although the intrinsic salinity of the lotus root stock itself was relatively low, it is understood that interactions with amino acids present in the stock enhanced the perception of saltiness. Referring to FIG. 4, among the mixed vegetable stocks, SLC253 (S:L:C = 2:5:3) exhibited the highest values in all evaluated categories, and it was also confirmed that the SLC352 formulation (S:L:C = 3:5:2) exhibited a significant effect. In conclusion, the mixed vegetable stocks were perceived in the order of saltiness intensity as follows: SLC253 > SLC433 > SLC352 > others, and the overall preference showed the same tendency. This contrasts with formulations such as SLC442, which exhibited relatively high saltiness intensity but low preference (saltiness), and SLC244, which exhibited both low saltiness intensity and low preference.

Each vegetable stock has its own inherent characteristics in terms of taste and flavor, and the intensity and preference may vary depending on the mixing ratio. According to the present invention, it was found that the preference was improved when vegetable stocks were used in combination rather than individually. These results are understood to arise from the mixing of various compounds when vegetable stocks are combined, thereby enriching taste and flavor and enhancing saltiness through interactions among umami and other taste components. In particular, according to the present invention, SLC253 exhibited a high level of saltiness perception and was identified as the most preferred combination.

In present Example, salt (NaCl) was added at a concentration of 0.67% to water and to the vegetable stocks, respectively, and the degree of saltiness perception was compared.

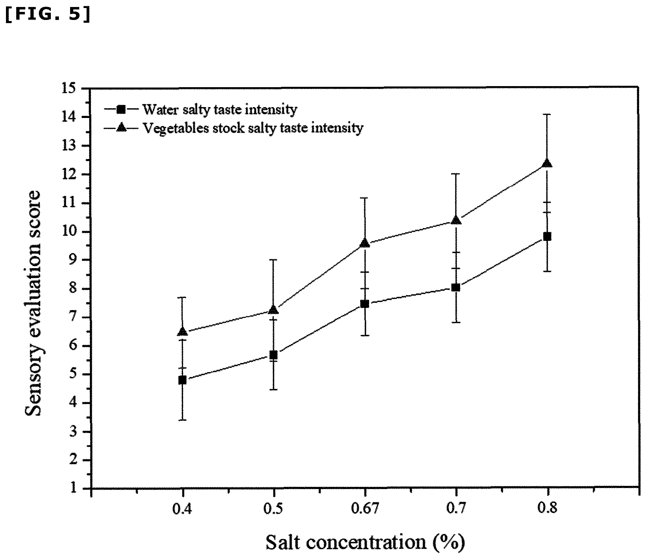

The results of the sensory evaluation of saltiness perception in water and vegetable stocks according to the added salt concentration are shown in FIG. 5. Referring to FIG. 5, when the same concentration of salt was added, the use of vegetable stocks resulted in an approximately 26% to 35% increase in perceived saltiness compared to water.

That is, when the vegetable stocks according to the present invention are used, the amount of salt added to impart saltiness can be reduced by approximately 16% to 25%.

### [Example 3]

### Preparation of HIPDEs to Which Vegetable Stock Is Applied

### 3-1. Selection of HIPDEs Formulations

An emulsion in which the proportion of the internal phase is higher than that of the external phase is referred to as a HIPEs (high internal phase emulsions), and a double emulsion in which the proportion of the internal phase is higher than that of the external phase is referred to as a HIPDEs (high internal phase double emulsion; hereinafter, HIPDEs). HIPDEs exhibit a broader range of interfacial activity than conventional double emulsions, thereby providing higher emulsifying ability. In addition, HIPDEs exhibit semi-solid characteristics and thus show a more stable form, resulting in high applicability to various food products.

When vegetable stock is applied during the preparation of double emulsions, or when an electrolyte is added to the external aqueous phase (W₂), the emulsion may rupture due to osmotic pressure and the like, thereby resulting in an unstable state. Accordingly, to prepare a stable emulsion, it is necessary to calculate the osmotic pressure and add an electrolyte also to the internal aqueous phase (W₁). In addition, since the properties of the emulsion vary depending on the ratio of W₁/O to W₂, in the present example, prior to the preparation of a double emulsion in the form of HIPDEs to which electrolytes and amino acids are added, a stable W₁/O:W₂ ratio was selected.

In the present example, in order to evaluate the stability according to the W₁/O:W₂ ratio, emulsions were prepared with ratios ranging from 5:5 to 8:2. As a result, up to 14 days of storage, only the emulsion having a W₁/O:W₂ ratio of 8:2 did not undergo phase separation and exhibited a stable form (see FIG. 6). In addition, formulations were varied according to the addition of amino acids and electrolytes to the internal and external aqueous phases, and the W₁/O:W₂ ratio was varied in the range of 5:5 to 8:2 during preparation. The formulation ratios are shown in Table 4 below, and photographs of the external appearance are shown in FIG. 6.

**[Table 4]**

| Positions and concentrations of NaCl, amino acids and MgCl₂ selected for each emulsion | | | | | |
|---|---|---|---|---|---|
| | Location | L-Arginine (mM) | Glycine (mM) | NaCl (mM) | MgCl₂ (mM) |
| A | W₁ | - | - | 116 | - |
| | W₂ | - | - | 116 | - |
| B | W₁ | 30 | 30 | 66 | - |
| | W₂ | - | - | 96 | - |
| C | W₁ | - | - | - | 97 |
| | W₂ | 30 | 30 | 116 | - |

Referring to Table 4 and FIG. 6, it can be confirmed that when the W₁/O:W₂ ratio is 8:2, HIPDEs having a stable form without phase separation are prepared.

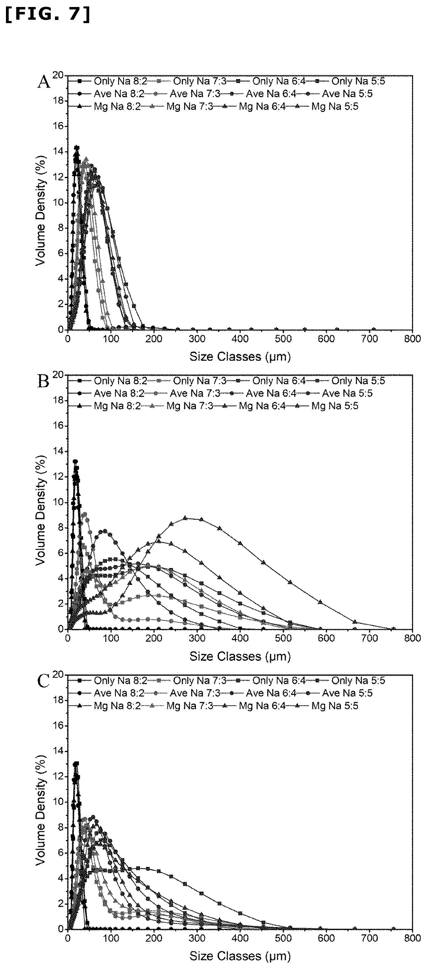

In this regard, FIG. 7 is an image showing the droplet size distribution of the double emulsions prepared according to the present invention, obtained using a Mastersizer (Mastersizer 3000, Malvern Instruments Ltd., Worcestershire, UK). In FIG. 7, A represents the result immediately after preparation of the double emulsion, B represents the result after 7 days, and C represents the result after 14 days. All primary emulsions (W₁/O) of the double emulsions observed in FIG. 7 were prepared under conditions of W₁ = 50% and O = 50%.

Referring to FIG. 7, it can be confirmed that only at the W₁/O:W₂ ratio of 8:2 in all treatment groups, the droplet size distribution remained constant over time.

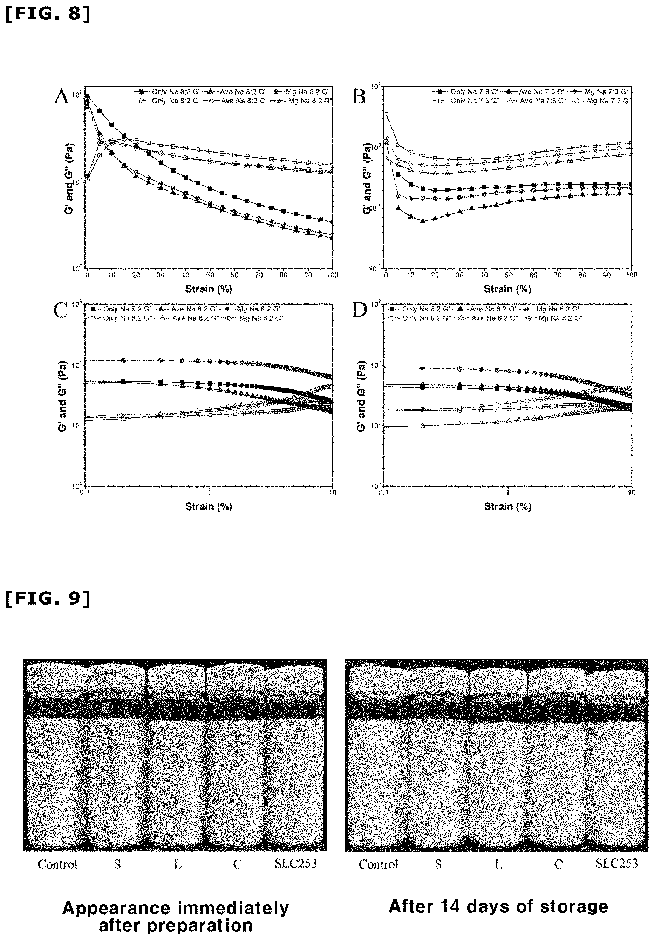

FIG. 8 shows the storage modulus (G') and loss modulus (G") of the prepared double emulsions. FIG. 8 shows the results obtained immediately after preparation at a W₁/O:W₂ ratio of 8:2 (A) and 7:3 (B), the results obtained after 7 days at a ratio of 8:2 (C) and after 14 days at a ratio of 8:2 (D). In the present example, viscoelastic properties were measured using a rheometer (MCR 302, Anton Paar, Graz, Austria).

When the W₁/O:W₂ ratio was 8:2, semi-solid characteristics were observed, whereas at a ratio of 7:3, liquid characteristics were maintained. Accordingly, based on characteristics such as high viscosity, semi-solid and low droplet size observed at the ratio of 8:2, it is determined that suitable HIPEs are formed (see FIG. 8).

Consequently, it was confirmed that the W₁/O:W₂ ratio of 8:2 exhibited the highest stability, and in the following examples, HIPDEs were prepared by applying vegetable stock to this formulation ratio.

### 3-2. Preparation of HIPDEs to Which Vegetable Stock Is Applied

HIPDEs were prepared at a W₁/O:W₂ formulation ratio of 8:2 selected according to Example 3-1, and the detailed formulation ratios are as set forth in Tables 5 and 6 below. The vegetable stock used for preparation included a total of seven types, consisting of three types of single vegetable stock and four types of mixed vegetable stock of Example 1.

**[Table 5]**

| Formulation ratio 1 for preparation of HIPDEs | | | |
|---|---|---|---|
| W₁/O/W₂ double emulsion (100%) | | | |
| | primary emulsion (80%) | | W₂ **phase** (20%, 50g) |
| | W₁ phase (40%, 100g) | Oil phase (40%, 100g) | |
| compo nent | MgCl₂ 97.6 mM, DW | PGPR 5%, Canola oil | NaCl 59.7 mM, Tween 2%, vegetable stock or water(Control) |

**[Table 6]**

| Formulation ratio for preparation of HIPDEs (w/w%) | | | | | | |
|---|---|---|---|---|---|---|
| | | | | | | (w/w%) |
| position | component | Control | S | L | C | SLC253 |
| W₁ | Water | 99.1 | 99.1 | 99.1 | 99.1 | 99.1 |
| | MgCl₂ | 0.93 | 0.93 | 0.93 | 0.93 | 0.93 |
| O | Canola oil | 95 | 95 | 95 | 95 | 95 |
| | PGPR | 5 | 5 | 5 | 5 | 5 |
| W₂ | Water | 48.7 | - | - | - | - |
| | Shiitake mushroom stock | - | 48.7 | - | - | 9.7 |
| | Lotus root stock | - | - | 48.7 | - | 24.4 |
| | Chinese cabbage stock | - | - | - | 48.7 | 14.6 |
| | NaCl | 0.34 | 0.34 | 0.34 | 0.34 | 0.34 |
| | Tween^{®} 80 | 1 | 1 | 1 | 1 | 1 |

In Table 6, the Control refers to HIPDEs prepared using water instead of vegetable stock, S refers to HIPDEs prepared using shiitake mushroom stock, L refers to HIPDEs prepared using lotus root stock, and C refers to HIPDEs prepared using Chinese cabbage stock. SLC253 refers to HIPDEs prepared using a mixed vegetable stock (S:L:C = 2:5:3).

### 1) Preparation of Primary Emulsion (W₁/O)

HIPDEs were prepared with reference to the formulation ratios shown in Tables 5 and 6. In the tables, for preparation of the internal aqueous phase (W₁), MgCl₂ was dissolved in water (distilled water) at a calculated concentration of 97mM. The oil phase (O) was prepared by sufficiently dissolving 5%(w/w) PGPR in canola oil. The internal aqueous phase at 50%(w/w) was dispersed in the oil phase at 50%(w/w), and the mixture was homogenized using a propeller stirrer (Chang Shin, South Korea) at 700 rpm for 3 minutes. Thereafter, the mixture was homogenized using a high-speed homogenizer (T25 digital IKA^{®}, Ultra-Turrax^{®}, Germany) at 15,000 rpm for 5 minutes to prepare a primary emulsion (W₁/O).

### 2) Preparation of Double Emulsion (W₁/O/W₂)

For preparation of the external aqueous phase (W₂), 2% (w/w) Tween^{®} 80 was dissolved in water or vegetable stock, and 116 mM NaCl was added and dissolved by calculating the osmotic pressure relative to the internal aqueous phase. The primary emulsion (W₁/O) was dispersed in the external aqueous phase, and the mixture was homogenized using a propeller stirrer at 700 rpm for 3 minutes. Thereafter, the mixture was homogenized using a high-speed homogenizer at 10,000 rpm for 3 minutes to prepare a W₁/O/W₂ double emulsion.

### [Example 4]

### Evaluation of Stability of HIPDEs to Which Vegetable Stock Is Applied

### 4-1. Appearance of HIPDEs to Which Vegetable Stock Is Applied

The appearances of HIPDEs prepared according to Example 3 using different types of vegetable stock are shown in FIG. 9. In FIG. 9, the control refers to HIPDEs prepared using water as the external aqueous phase (W₂) instead of vegetable stock, S refers to HIPDEs prepared using shiitake mushroom stock; L refers to HIPDEs prepared using lotus root stock, C refers to HIPDEs prepared using Chinese cabbage stock and SLC253 refers to HIPDEs prepared using a mixed vegetable stock (S:L:C = 2:5:3). Specifically, FIG. 9 shows the appearances of the respective HIPDEs prepared according to Table 5. In Fig. 9, p < 0.05. Referring to FIG. 9, both the control group and the experimental groups S, L, C and SLC253 exhibited stable forms immediately after preparation, and remained stable without phase separation up to 14 days of storage.

### 4-2. Confirmation of Particle Size and Zeta Potential of HIPDEs to Which Vegetable Stock Is Applied

In the present example, the particle size of the prepared HIPDEs was measured using a Mastersizer (Mastersizer 3000, Malvern Instruments Ltd., Worcestershire, UK), and the zeta potential of the HIPDEs was measured using a Zetasizer (Zetasizer Nano ZS 90, Malvern, London, UK).

The particle size and zeta potential of the HIPDEs to which vegetable stock was applied and which were prepared according to Table 6 are shown in Table 7.

Referring to Table 7, the particle size values d_{[3,2]} and d_{[4,3]} showed the largest values in the control prepared using water, whereas the particle sizes of the HIPDEs prepared using vegetable stock were relatively smaller. In addition, the absolute values of the zeta potential of the HIPDEs prepared using vegetable stock were much larger than those of the control, indicating higher stability. Compared to immediately after preparation, the particle size generally increased slightly after 7 days and 14 days of storage, however, no remarkable increase was observed.

**[Table 7]**

| Characteristics of HIPDEs Prepared Using Single Vegetable Stock and Mixed Vegetable Stock at the Time of Preparation (Day 0), After 7 Days of Storage and After 14 Days of Storage | | | | | |
|---|---|---|---|---|---|
| | trea tme nt | Droplet size d_{[3,2]}[µm] | Droplet size d_{[4,3]}[µm] | Span value | ζ-potential[mV] |
| Time of prepa ratio n | Cont rol | 20.37±0.13 Aa | 23.26±0.15 Aa | 0.98±0.01 _{Db} | -17.76± 0.89^{Aa} |
| | S | 18.23±0.42 Cb | 21.34±0.05 _{Dc} | 1.05±0.02 ABb | -24.30±0.76^{Ba} |
| | L | 18.05±0.05 _{Cc} | 20.72±0.04 _{Ec} | 1.00±0.01 _{Cc} | -26.57±1.91^{Ca} |
| | C | 18.54±0.31 Ba | 21.73±0.11 _{Bc} | 1.06±0.02 Ab | -18.73±0.93^{Aa} |
| | SLC 253 | 18.68±0.04 Ba | 21.60±0.00 Ca | 1.04±0.01 Bb | -23.83±0.82^{Ba} |
| Day 7 | Cont rol | 20.42±0.00 Aa | 23.30±0.00 Aa | 1.00±0.01 Da | -19.15±2.00^{Aa} |
| | S | 18.70±0.07 Ca | 21.60±0.07 Cb | 1.04±0.01 Bb | -25.14±1.68^{Ca} |
| | L | 18.24±0.05 _{Db} | 20.96±0.05 Db | 1.02±0.00 Cb | -30.63±2.16^{Db} |
| | C | 19.02±0.04 Ba | 22.08±0.04 Bb | 1.05±0.01 Ab | -21.52±1.56^{Bb} |
| | SLC 253 | 18.68±0.04 Ca | 21.62±0.04 Ca | 1.03±0.00 Bb | -25.90±1.48^{Ca} |
| | Cont rol | 20.42±0.04 Aa | 23.32±0.04 Aa | 0.99±0.00 Bab | -23.37±1.50^{Ab} |
| | S | 18.72±0.04 Ba | 21.84±0.05 Ca | 1.07±0.01 ABa | -27.73±0.98^{Bb} |
| Day 14 | L | 18.30±0.00 Ba | 21.26±0.05 Ba | 1.06±0.01 ABa | -35.78±4.12^{Dc} |
| | C | 19.37±1.45 ABa | 22.64±0.21 Ea | 1.27±0.27 Aa | 32.32±2.50^{CDc} |
| | SLC 253 | 18.70±0.00 Ba | 21.64±0.05 Da | 1.09±0.04 ABa | - 29.15±4.20^{BCb} |

In Table 7, the control refers to HIPDEs prepared using water instead of vegetable stock, S refers to HIPDEs prepared using shiitake mushroom stock, L refers to HIPDEs prepared using lotus root stock, C refers to HIPDEs prepared using Chinese cabbage stock and SLC253 refers to HIPDEs prepared using a mixed vegetable stock (S:L:C = 2:5:3). Superscripts A-E indicate significant differences among samples at the same storage period, and superscripts a-c indicate significant differences according to storage period within the same sample (p < 0.05).

### 4-3. Particle Size Distribution of HIPDEs to Which Vegetable Stock Is Applied

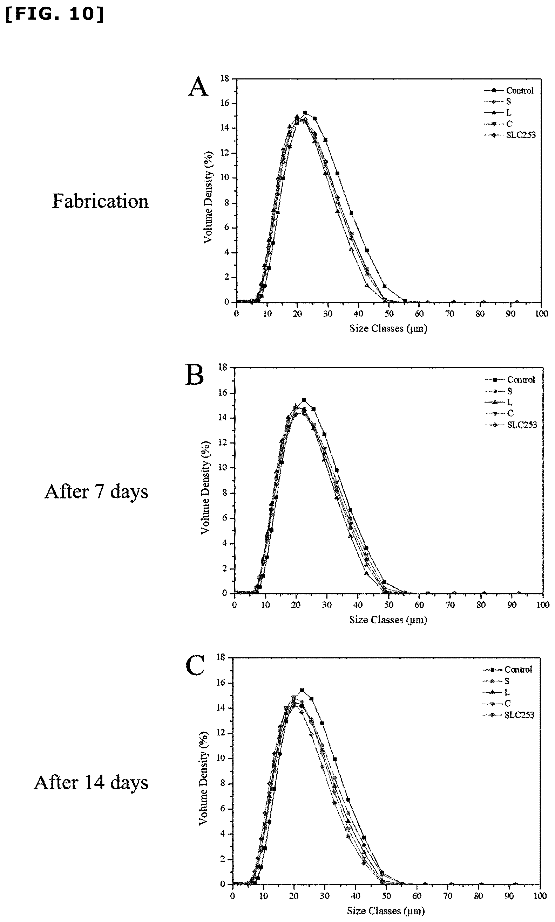

The particle size distribution of the prepared HIPDEs to which vegetable stock was applied was measured using a Mastersizer (Mastersizer 3000, Malvern Instruments Ltd., Worcestershire, UK), and the results are shown in FIG. 10. It can be confirmed that the distribution pattern remained constant over time immediately after preparation (A of FIG. 10), 7 days after preparation (B of FIG. 10) and 14 days after preparation (C of FIG. 10). However, as the storage period progressed, the particle size gradually increased, and accordingly, the range of the distribution slightly changed.

### 4-4. Morphological Analysis of HIPDEs to Which Vegetable Stock Is Applied

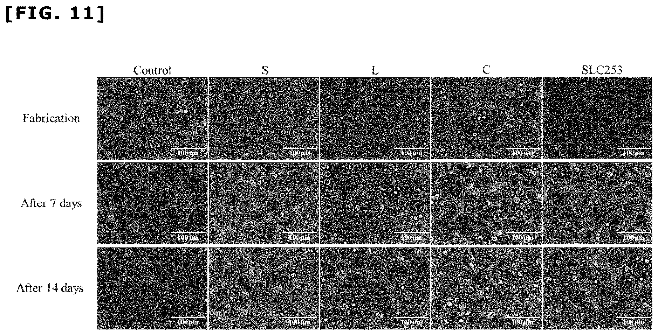

Optical microscope (CX31, Olympus Optical Co., Ltd., Tokyo, Japan) images of the HIPDEs to which vegetable stock was applied and which were prepared according to the present invention are shown in FIG. 11. Consistent with the results of particle size and distribution according to storage period, microscopic observation also confirmed stable forms without aggregation or rupture. Referring to the results shown in FIG. 11, it can be confirmed that W₁ was well encapsulated within the oil phase, and that as the particle size and distribution were generally uniform, the particle size and shape also followed a consistent tendency.

### 4-5. Confirmation of Viscoelastic Properties of HIPDEs to Which Vegetable Stock Is Applied

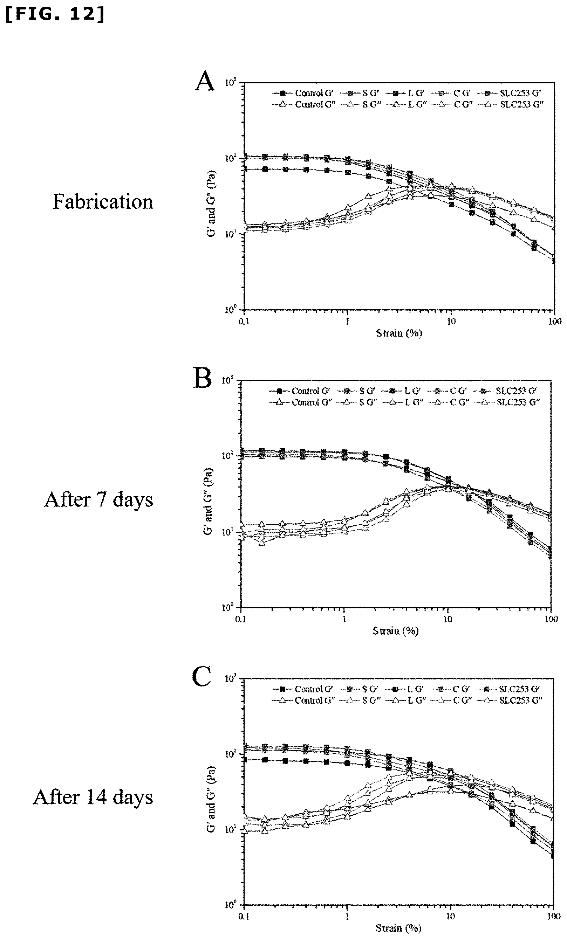

The viscoelastic properties of the HIPDEs to which vegetable stock was applied were measured using a Rheometer (MCR 302, Anton Paar, Graz, Austria), and the results are shown in FIG. 12. All treatment groups exhibited a semi-solid form, and when strain was applied, the samples exhibited viscous behavior as G' (storage modulus) and G" (loss modulus) were interchanged. It can be confirmed that the semi-solid form was continuously maintained from immediately after preparation (A of FIG. 12) through 7 days of storage (B of FIG. 12) and 14 days of storage (C of Fig. 12).

### [Example 5]

### Confirmation of the Preparation Ratio of the Primary Emulsion

In the present example, it was intended to confirm whether HIPDEs could be stably prepared even when the ratio of the primary emulsion (W₁:O) was varied during the preparation of HIPDEs in the form of a W₁/O/W₂ double emulsion to which vegetable stock was applied.

Referring to Table 5, the ratio of the W₁ phase to the oil phase in the primary emulsion is 5:5. Through additional experiments, the inventors confirmed that even when the ratio of the W₁ phase to the oil phase ranged from 2:8 to 5:5, the prepared HIPDEs maintained a stable form. In the present example, the W¹:O ratio was set to 2:8, while the W₁/O:W₂ ratio was maintained at 8:2, and the detailed formulation ratios are shown in Table 8 below. Except for the W₁:O ratio, the remaining preparation method is the same as the HIPDEs preparation method described in Example 3.

**[Table 8]**

| Formulation ratio 2 for preparation of HIPDEs (W₁:O = 2:8) | | | |
|---|---|---|---|
| W₁/O/W₂ double emulsion(100%) | | | |
| | Primary emulsion(80%) | | W₂ phase (20%, 50g) |
| | W₁ phase (16%, 40g) | Oil phase (64%, 160g) | |
| component | MgCl₂ 97.6 mM, DW | PGPR 5%, Canola oil | NaCl 59.7 mM, Tween 2%, vegetable stock |

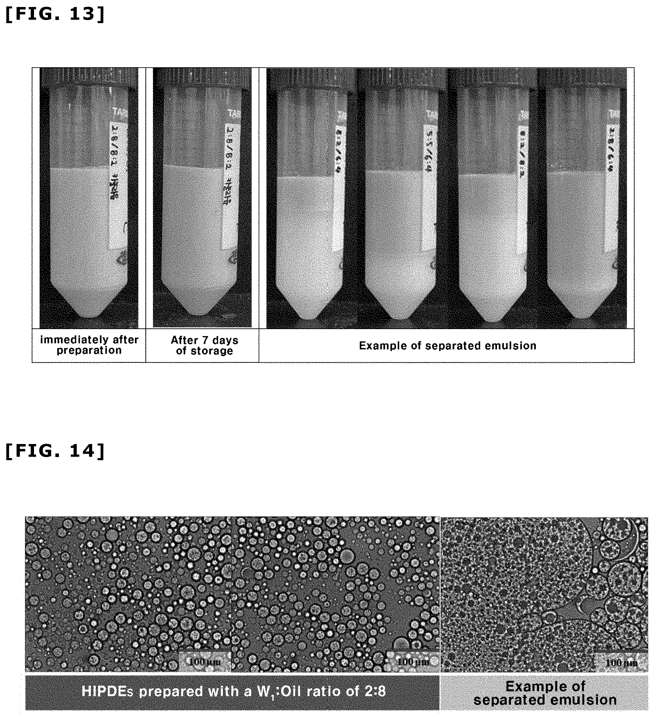

Photographs showing the external appearance of the HIPDEs prepared according to the formulation ratio of Table 8 (prepared with a W₁:O ratio of 2:8) are shown in FIG. 13 below. In the present example, in order to facilitate visual observation of the degree of emulsion separation, the oil phase was prepared by adding red dye thereto. Referring to FIG. 13, it can be confirmed that the HIPDEs prepared with a W₁:O ratio of 2:8 did not undergo separation and maintained a stable form immediately after preparation and up to 7 days of storage. In contrast, when emulsion separation occurs, layers are formed as shown in the example photograph on the right side of FIG. 13.

According to the present example, microscopic images of the HIPDEs prepared with a W₁:O ratio of 2:8 are shown in FIG. 14. Referring to FIG. 14, it can be confirmed that the HIPDEs prepared with a W₁:O ratio of 2:8 were formed with small-sized particles and exhibited a stable form.

In particular, it can be observed that the particle size formed at a W₁:O ratio of 2:8 was much smaller than that formed at a W₁:O ratio of 5:5. Since the emulsion was formed with a smaller particle size, when the emulsion is observed under a microscope as prepared, the particles are densely present on the slide glass, making it difficult to identify the size of individual particles. Accordingly, the microscopic images shown in FIG. 14 are images obtained after diluting the W₁/O/W₂ emulsion (W₁:O = 2:8) with an equal amount of water. When emulsion separation occurs or particles rupture, the exact particle size cannot be identified and the particles do not exhibit a spherical shape, as shown in the example photograph on the right side of FIG. 14.

That is, according to the present example, during preparation of the vegetable stock applied W₁/O/W₂ HIPDEs of the present invention, the primary emulsion (W₁/O) can be prepared at a W₁:O ratio (weight ratio) in the range of 2:8 to 5:5, and in this case, HIPDEs having a stable form can be prepared.

Likewise, during preparation of mayonnaise described in the following examples, a stable form can be obtained even when the primary emulsion is prepared at a W₁:O ratio of 2:8, however, in the following examples, HIPDEs and mayonnaise were prepared with the W₁:O ratio set to 5:5.

### [Example 6]

### Preparation of Low-Sodium Mayonnaise

### 6-1. Preparation of Mayonnaise in the Form of HIPDEs

As described above, in Example 3-1, it was confirmed that when a double emulsion was prepared by applying vegetable stock, a W₁/O:W₂ ratio of 8:2 exhibited a HIPDEs form and maintained a stable form for at least 14 days of storage. Accordingly, mayonnaise was prepared in the form of a double emulsion by applying a mayonnaise formulation to the HIPDEs preparation formulation and method.

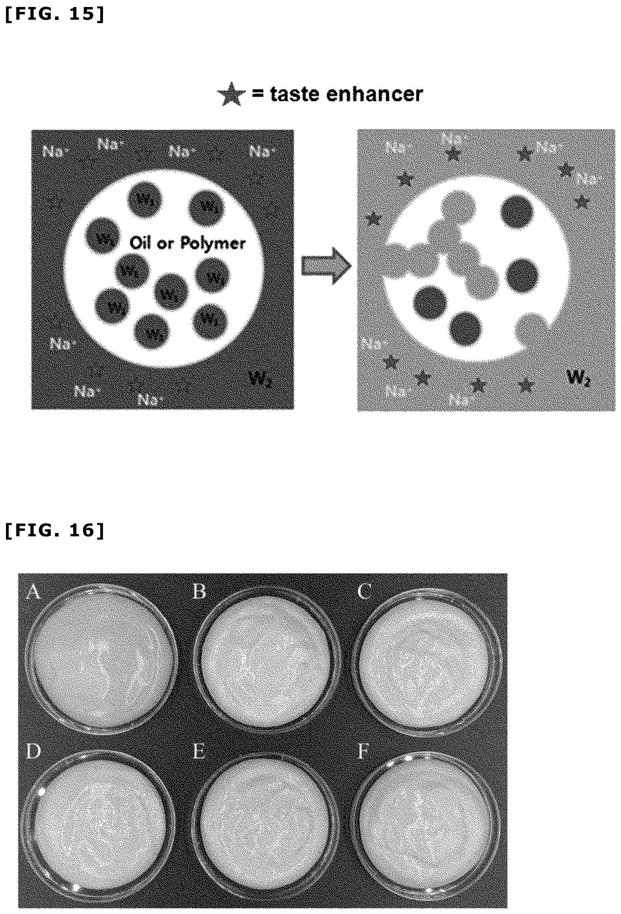

Conventional mayonnaise is an O/W-type and is a food product in the form of a single emulsion food in which water and oil are emulsified. However, when vegetable stock is applied to the external aqueous phase (W₂) in a double emulsion, a stronger saltiness can be perceived due to the vegetable stock even when the same amount of salt is used, thereby enabling a reduction in salt usage. In addition, during mastication or digestion, the water of the internal aqueous phase is released to the outside and causes dilution, thereby reducing sodium absorption (see FIG. 15).

In the present example, mayonnaise in the form of a double emulsion was prepared using vegetable stock as the external aqueous phase (W₂), and the specific formulation ratios are shown in Tables 9 and 10.

**[Table 9]**

| Formulation Ratios for Preparation of Mayonnaise in the Form of HIPDEs | | | |
|---|---|---|---|
| W₁/O/W₂ double emulsion(100%) | | | |
| | Primary emulsion(80%) | | W₂ phase (20%, 50g) |
| | W₁ phase (40%, 100g) | Oil phase (40%, 100g) | |
| component | MgCl₂ 398.1 mM, DW | PGPR 2%, Soybean oil | NaCl 597.2 mM, vegetable stock or water, egg yolk, sugar, vinegar |

**[Table 10]**

| Formulation Ratios for Preparation of Mayonnaise in the Form of HIPDEs (w/w%) | | | | | | |
|---|---|---|---|---|---|---|
| | | | | | | (w/w%) |
| position | compon ent | Control | S | L | C | SLC253 |
| W₁ | Water | 96.21 | 96.21 | 96.21 | 96.21 | 96.21 |
| | MgCl₂ | 3.79 | 3.79 | 3.79 | 3.79 | 3.79 |
| O | Soybea n oil | 98 | 98 | 98 | 98 | 98 |
| | PGPR | 2 | 2 | 2 | 2 | 2 |
| | Water | 9.3 | - | - | - | - |
| | Shiitak e mushro om stock | - | 9.3 | - | - | 1.86 |
| | Lotus root stock | - | - | 9.3 | - | 4.65 |
| W₂ | Chines e cabbag e stock | - | - | - | 9.3 | 2.79 |
| | Egg yolk | 27.9 | 27.9 | 27.9 | 27.9 | 27.9 |
| | NaCl | 3.49 | 3.49 | 3.49 | 3.49 | 3.49 |
| | Sugar | 2.33 | 2.33 | 2.33 | 2.33 | 2.33 |
| | Vinegar | 6.98 | 6.98 | 6.98 | 6.98 | 6.98 |

In Table 10, the control refers to mayonnaise prepared using water instead of vegetable stock (double emulsion type), S refers to mayonnaise prepared using shiitake mushroom stock, L refers to mayonnaise prepared using lotus root stock, C refers to mayonnaise prepared using Chinese cabbage stock and SLC253 refers to mayonnaise prepared using a mixed vegetable stock (S:L:C = 2:5:3).

### 1) Preparation of Primary Emulsion (W₁/O)

The double-emulsion-type mayonnaise prepared using vegetable stock was prepared with reference to the formulation ratios shown in Tables 9 and 10, and the method for preparing W₁/O was the same as the method for preparing W₁/O of HIPDEs. Referring to Table 9, for preparation of the internal aqueous phase (W₁), MgCl₂ was dissolved in distilled water at a calculated concentration of 398mM. The oil phase (O) was prepared by sufficiently dissolving 2%(w/w) PGPR in soybean oil. The internal aqueous phase at 50%(w/w) was dispersed in the oil phase at 50%(w/w), and the mixture was homogenized using a propeller stirrer (Chang Shin, South Korea) at 700 rpm for 3 minutes. Thereafter, the mixture was homogenized using a high-speed homogenizer (T25 digital IKA^{®}, Ultra-Turrax^{®}, Germany) at 15,000 rpm for 5 minutes to prepare a primary emulsion (W₁/O).

### 2) Preparation of Double Emulsion (W₁/O/W₂)

For preparation of the external aqueous phase (W₂), egg yolk and sugar were dissolved in water (distilled water) or vegetable stock, and 597 mM NaCl was added and dissolved by calculating the osmotic pressure relative to the internal aqueous phase. The primary emulsion (W₁/O) was dispersed in the external aqueous phase and homogenized using a propeller stirrer at 700 rpm for 7 minutes. At this time, during addition and dispersion, emulsification was performed by slowly adding the primary emulsion in approximately 6 to 7 portions over 7 minutes. If added all at once, phase separation may occur. Thereafter, vinegar was added and homogenized for 3 minutes, followed by homogenization using a high-speed homogenizer at 10,000 rpm for 3 minutes to prepare a W₁/O/W₂ double emulsion.

### 6-2. Confirmation of Low-Sodium Effect of Mayonnaise in the Form of HIPDEs

### 1) Appearance identification

The appearances of the respective HIPDEs-type mayonnaise prepared according to Example 6-1 are shown in FIG. 16. In FIG. 16, A represents single-emulsion-type mayonnaise (oil-in-water; O/W), B represents mayonnaise prepared using water instead of vegetable stock as the external aqueous phase (double emulsion type), C represents mayonnaise prepared using shiitake mushroom stock, D represents mayonnaise prepared using lotus root stock, E represents mayonnaise prepared using Chinese cabbage stock and F represents mayonnaise prepared using a mixed vegetable stock (S:L:C = 2:5:3).

Referring to FIG. 16, in terms of appearance, the single-emulsion mayonnaise (hereinafter referred to as single mayonnaise) exhibited the firmest and most rigid texture. The other double-emulsion mayonnaise samples (hereinafter referred to as double mayonnaise) exhibited slightly higher flowability and a softer texture compared to the single mayonnaise, and no significant visual differences were observed among the double mayonnaises.

### 2) Color Value

The color values of the HIPDEs-type mayonnaise are shown in Table 11 below. In terms of color, only the O/W-type single mayonnaise exhibited a deep yellow color, whereas the remaining double mayonnaises exhibited higher lightness and lower a* and b* values compared to the single mayonnaise.

**[Table 11]**

| Color values of mayonnaise prepared using single vegetable stock and mixed vegetable stock | | | |
|---|---|---|---|
| treatment | Color value | | |
| | L* | a* | b* |
| O/W Mayo | 75.32±0.02^{f} | -6.84±0.04^{c} | 30.35±0.07^{a} |
| Control | 89.19±0.01^{a} | -4.39±0.03^{a} | 20.86±0.05^{e} |
| S | 89.06±0.02^{c} | -4.43±0.01^{a} | 20.96±0.02^{d} |
| L | 88.61±0.01^{e} | -4.55±0.07^{b} | 21.48±0.12^{b} |
| C | 89.16±0.01^{b} | -4.55±0.02^{b} | 21.27±0.06^{c} |
| SLC253 | 88.98±0.00^{d} | -4.54±0.02^{b} | 20.97±0.05^{d} |

In Table 11, O/W Mayo refers to single-emulsion mayonnaise (oil-in-water; O/W), the control refers to mayonnaise prepared using water instead of vegetable stock (double emulsion type), S refers to mayonnaise prepared using shiitake mushroom stock, L refers to mayonnaise prepared using lotus root stock and C refers to mayonnaise prepared using Chinese cabbage stock. SLC253 refers to mayonnaise prepared using a mixed stock (S:L:C = 2:5:3).

### 3) Sensory Evaluation Results

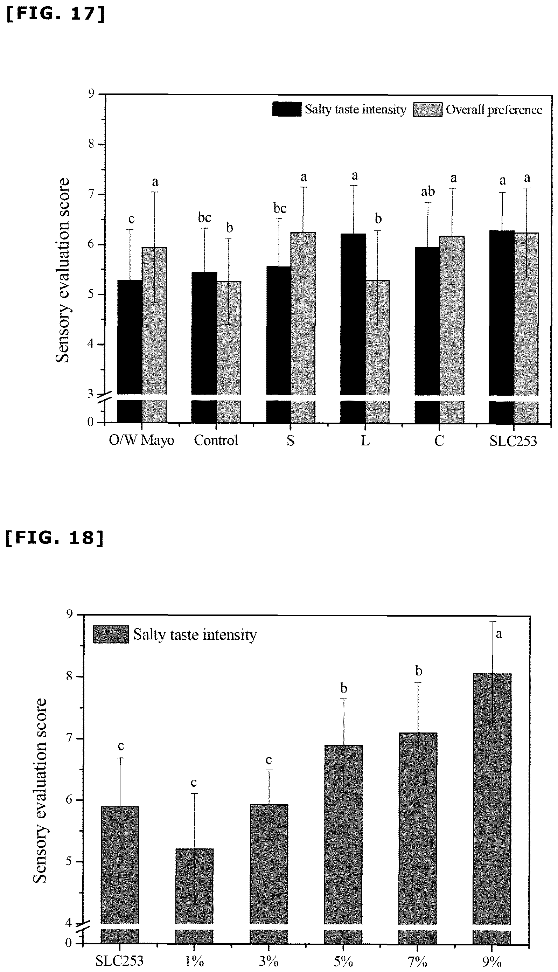

The sensory evaluation results of the HIPDEs-type mayonnaise prepared according to the present invention are shown in FIG. 17. The tendency was the same as that of the vegetable stock sensory evaluation results confirmed in Example 2-2. When the same amount of salt was used, the double mayonnaise was perceived to be significantly saltier than the single mayonnaise. Among the double mayonnaises, the mayonnaise prepared using the mixed vegetable stock formulation SLC253 exhibited the highest values in terms of saltiness and preference compared to those prepared using single vegetable stock.

### 4) Comparison of Differences in Saltiness Perception Between Single and Double Mayonnaise

A sensory evaluation was conducted to compare how much the salt content of single mayonnaise needed to be increased (x%) to be perceived as having the same saltiness as the vegetable stock applied double mayonnaise of the present invention, and the results are shown in FIG. 18. In FIG. 18, "%" indicates the increase rate of salt content in the single mayonnaise.

The double mayonnaise prepared using vegetable stock according to the present invention exhibited a saltiness perception similar to that of single mayonnaise in which the salt content was increased by 1-3%. This indicates that the double-emulsion-type mayonnaise using vegetable stock enables a reduction in salt usage by 1-3% compared to single mayonnaise by enhancing saltiness perception.

In addition, unlike single mayonnaise, in the case of double mayonnaise, when the water of the internal aqueous phase of W₁/O/W₂ is released and dilutes sodium in the body, sodium absorption can be reduced by approximately 34%. Furthermore, since double mayonnaise uses a smaller amount of oil than single mayonnaise, the oil content can also be reduced by approximately 46.3%, which provides an advantage.

The present invention has been described above with reference to preferred embodiments thereof. Those skilled in the art to which the present invention pertains will understand that the present invention may be implemented in modified forms without departing from the essential characteristics of the present invention. Accordingly, the disclosed embodiments should be considered in an illustrative rather than a limiting sense. The scope of the present invention is defined by the claims rather than the foregoing description, and all differences within the scope equivalent thereto should be construed as being included in the present invention.

## Claims

1. A food composition for enhancing saltiness, comprising a shiitake *mushroom(Lentinula edodes)* extract, a lotus *root(Nelumbo nucifera)* extract and a Chinese cabbage(*Brassica campestris)* extract.

2. The composition of claim 1,
wherein 0.7 to 2.5 parts by weight of the lotus root extract and 0.6 to 1.5 parts by weight of the Chinese cabbage extract are mixed together, with respect to 1 part by weight of the shiitake mushroom extract.

3. The composition of claim 1,
wherein the shiitake mushroom extract is that extracted from 5 to 15 g of dried shiitake mushroom per liter (L) of an extraction solvent.

4. The composition of claim 1,
wherein the lotus root extract is that extracted from 5 to 15 g of dried lotus root per liter (L) of an extraction solvent.

5. The composition of claim 1,
wherein the Chinese cabbage extract is that extracted from 5 to 15 g of dried Chinese cabbage per liter (L) of an extraction solvent.

6. The composition of claim 1,
wherein the shiitake mushroom extract, the lotus root extract and the Chinese cabbage extract are each extracted using hot water.

7. A food additive emulsion comprising a mixed composition of a shiitake *mushroom(Lentinula edodes)* extract, a lotus *root(Nelumbo nucifera)* extract and a Chinese *cabbage(Brassica campestris)* extract.

8. The emulsion of claim 7,
wherein the emulsion is a water-in-oil-in-water (W₁/O/W₂) double emulsion, in which a water-in-oil (W₁/O) emulsion dispersed in an external aqueous phase (W₂),
wherein W₁ is an internal aqueous phase, O is an oil phase, and W₂ is an external aqueous phase,
and wherein the external aqueous phase comprises the mixed composition of the shiitake mushroom extract, the lotus root extract and the Chinese cabbage extract.

9. The emulsion of claim 8,
wherein the mixed composition is one in which 0.7 to 2.5 parts by weight of the lotus root extract and 0.6 to 1.5 parts by weight of the Chinese cabbage extract are mixed together, with respect to 1 part by weight of the shiitake mushroom extract.

10. The emulsion of claim 8,
wherein the food additive emulsion is one in which 2 parts by weight of the external aqueous phase (W₂) are mixed, with respect to 8 parts by weight of the water-in-oil (W₁/O).

11. The emulsion of claim 8,
wherein, in the water-in-oil (W₁/O), a weight ratio of the internal aqueous phase to the oil phase is 2:8 to 5:5.

12. A method for preparing a food additive emulsion, comprising:
a) preparing a mixed composition comprising a shiitake mushroom *(Lentinula edodes)* extract, a lotus root *(Nelumbo nucifera)* extract and a Chinese cabbage *(Brassica campestris)* extract;
b) preparing a water-in-oil (W₁/O) emulsion; and
c) mixing 8 parts by weight of the water-in-oil emulsion of step b) with respect to 2 parts by weight of the mixed composition prepared in step a).

13. The method of claim 12,
wherein the mixed composition is one in which 0.7 to 2.5 parts by weight of the lotus root extract and 0.6 to 1.5 parts by weight of the Chinese cabbage extract are mixed together, with respect to 1 part by weight of the shiitake mushroom extract.

14. A low-sodium mayonnaise prepared using the food additive emulsion prepared according to claim 13.
